# EUROPÄISCHE PATENTSCHRIFT

(11) **EP 2 370 714 B1**
(45) Veröffentlichungstag und Bekanntmachung des Hinweises auf die Patenterteilung: **12.12.2012**
(21) Anmeldenummer: 09737413.6
(22) Anmeldetag: 19.10.2009
(51) Int. Cl.: F16K 11/07

(54) **ELEKTROMAGNETISCHE STELLEINHEIT**
ELECTROMAGNETIC ACTUATING UNIT
UNITÉ DE COMMANDE ÉLECTROMAGNÉTIQUE

(30) Priorität: 26.11.2008 DE 102008059013
(43) Veröffentlichungstag der Anmeldung: 05.10.2011
(73) Patentinhaber: Schaeffler Technologies AG & Co. KG, 91074 Herzogenaurach (DE)
(72) Erfinder: HOPPE, Jens, 91056 Erlangen (DE); RÖHR, Andreas, 91336 Heroldsbach (DE)
(86) Internationale Anmeldenummer: PCT/EP2009/063645
(87) Internationale Veröffentlichungsnummer: WO 2010/060689

(56) Entgegenhaltungen:
- US-A- 4 240 467
- US-A1- 2005 000 577
- US-B1- 6 298 880

## Beschreibung

### Gebiet der Erfindung

Die Erfindung betrifft ein hydraulisches Wegeventil mit einem Ventilgehäuse und einem darin verschiebbar angeordneten Steuerkolben, wobei das Ventilgehäuse zumindest einen Ablaufanschluss, einen Zulaufanschluss und einen Arbeitsanschluss aufweist, wobei der Steuerkolben einen Grundkörper und zumindest einen Steuerabschnitt aufweist, wobei der Steuerabschnitt einen Druckmittelfluss von dem Zulaufanschluss zu dem Arbeitsanschluss und/oder einen Druckmittelfluss von dem Arbeitsanschluss zu dem Ablaufanschluss steuert und wobei der Steuerabschnitt separat zu dem Grundkörper gefertigt und an diesem befestigt ist.

Derartige hydraulische Wegeventile, beispielsweise Proportionalwegeventile, werden in Brennkraftmaschinen beispielsweise zur Ansteuerung von hydraulischen Nockenwellenverstellern oder schaltbaren Nockenfolgern eingesetzt. Die Hydraulikventile bestehen aus einer elektromagnetischen Stelleinheit und einem Ventilabschnitt. Der Ventilabschnitt stellt den hydraulischen Abschnitt des Wegeventils dar, wobei an diesem zumindest ein Zulaufanschluss, mindestens ein Arbeitsanschluss und ein Tankanschluss ausgebildet sind. Mittels der elektromagnetischen Stelleinheit können gezielt bestimmte Anschlüsse des Ventilabschnitts hydraulisch miteinander verbunden und somit die Druckmittelströme gelenkt werden.

Ein derartiges Hydraulikventil ist beispielsweise in der DE 102 30 966 A1 offenbart. Das Hydraulikventil weist einen Ventilabschnitt und eine elektromagnetische Stelleinheit auf.

Der Ventilabschnitt besteht aus einem Ventilgehäuse und einem darin axial verschiebbar angeordneten Steuerkolben. Das Ventilgehäuse ist innerhalb einer Aufnahmeöffnung eines Magnetjochs der elektromagnetischen Stelleinheit angeordnet und ortsfest mit diesem verbunden. An der Außenmantelfläche des Ventilgehäuses sind drei Druckmittelanschlüsse, ein Zulaufanschluss und zwei Arbeitsanschlüsse, ausgebildet. Des Weiteren ist ein axialer Ablaufanschluss vorgesehen Im Inneren des Ventilgehäuses ist ein Steuerkolben axial verschiebbar angeordnet, wobei an dem Steuerkolben zwei Steuerabschnitte ausgebildet sind. Die Außendurchmesser der Steuerabschnitte sind dem Innendurchmesser des Ventilgehäuses angepasst. Mittels der Steuerabschnitte können, abhängig von der relativen Stellung des Steuerkolbens zum Ventilgehäuse, die Druckmittelanschlüsse wahlweise miteinander verbunden oder getrennt werden. Die Steuerabschnitte sind als ringförmige Strukturen an dem Steuerkolben ausgebildet. Dabei überdecken die Steuerabschnitte die als radiale Öffnungen in dem Ventilgehäuse ausgebildeten Arbeitsanschlüsse teilweise, wodurch ein Druckmittelfluss von dem Zulaufanschluss zu dem Arbeitsanschluss oder ein Druckmittelfluss von dem Arbeitsanschluss zu dem Ablaufanschluss blockiert bzw. zugelassen wird.

An derartige Wegeventile werden zwei sich widersprechende Anforderungen gestellt. Zum einen soll der Zufluss von Druckmittel zu einem der Arbeitsanschlüsse deutlich höher sein, als der Abfluss von dem anderen Arbeitsanschluss. Dies gewährleistet eine hohe Kontrollstabilität des Nockenwellenverstellers. Zu Berücksichtigen sind vor allem Betriebspunkte der Brennkraftmaschine, in denen hohe Temperaturen und damit eine geringe Viskositäten des Druckmittels vorherrschen und die Brennkraftmaschine in niedrigen Drehzahlen betrieben wird. In diesen Betriebspunkten ist die von der Druckmittelpumpe zu dem Zulaufanschluss und dem mit diesem verbundenen Arbeitsanschluss geförderte Druckmittelmenge gering. Gleichzeitig erfolgt auf Grund der geringen Viskosität ein hoher Abfluss aus dem anderen Arbeitsanschluss zu dem Ablaufanschluss.

Des Weiteren wird die Anforderung geringer Druckverluste an das Hydraulikventil gestellt. Diese sind insbesondere bei niedrigen Temperaturen, bei denen das Druckmittel eine hohe Viskosität aufweist, nicht zu vernachlässigen. Dieser Anforderungen werden von dem bekannten hydraulischen Wegeventil nur unzureichend berücksichtigt

Andere Ventile mit Steuerkolben sind z.B. in US6298880, US4240467 oder US 2005/0000577 offenbart.

### Zusammenfassung der Erfindung

Der Erfindung liegt daher die Aufgabe zugrunde ein hydraulisches Wegeventil zu schaffen, das insbesondere bei niedrigen Temperaturen geringe Druckverluste und auch bei hohen Temperaturen eine hohe Kontrollstabilität aufweist.

Erfindungsgemäß wird die Aufgabe dadurch gelöst, dass der Steuerabschnitt in Verschieberichtung des Steuerkolbens einen größeren thermischen Längenausdehnungskoeffizienten aufweist als der Grundkörper.

Das hydraulische Wegeventil weist ein Ventilgehäuse und einen darin angeordneten und verschiebbaren Steuerkolben auf. Das Ventilgehäuse und der Steuerkolben können beispielsweise im Wesentlichen hohlzylindrisch ausgebildet sein. Dabei kann der Steuerkolben beispielsweise mittels einer elektromagnetischen Stelleinheit in axialer Richtung innerhalb des Ventilgehäuses verschoben werden. Das Ventilgehäuse weist zumindest einen Ablaufanschluss, einen Zulaufanschluss und einen Arbeitsanschluss auf, wobei der Arbeitsanschluss und der Zulaufanschluss oder der Ablaufanschluss als radiale Öffnung des Ventilgehäuses ausgebildet sein kann. Der Steuerkolben weist einen Grundkörper und zumindest einen Steuerabschnitt auf, wobei der Steuerabschnitt einer inneren Mantelfläche des Ventilgehäuses angepasst ist. Der Grundkörper kann beispielsweise aus einem Blech, als Spritzguss- oder Drehteil ausgebildet sein. Als Werkstoffe können beispielsweise Stahl, Leichtmetalle, wie Magnesium oder Aluminium, oder Kunststoffe Verwendung finden.
Der Steuerabschnitt blockiert, abhängig von der Stellung des Steuerkolbens relativ zu dem Ventilgehäuse, einen Druckmittelfluss von dem Zulaufanschluss zu dem Arbeitsanschluss oder von dem Arbeitsanschluss zu dem Ablaufanschluss, während dieser einen Druckmittelfluss zwischen den jeweils anderen Anschlüssen zulässt. Des Weiteren können Stellungen des Steuerkolbens relativ zu dem Ventilgehäuse vorgesehen sein, in denen Druckmittelflüsse zu und von dem Arbeitsanschluss von dem Steuerabschnitt komplett unterbunden werden, abgesehen von Leckage. Dies kann beispielsweise dadurch realisiert sein, das der Steuerabschnitt den als radiale Öffnung ausgeführten Arbeitsanschluss teilweise überdeckt.
Der Steuerabschnitt ist separat zu dem Grundkörper gefertigt und an diesem befestigt ist. Dabei weist der Steuerabschnitt in Verschieberichtung des Steuerkolbens einen größeren thermischen Längenausdehnungskoeffizienten auf als der Grundkörper.
Somit kann die Ausdehnung des Steuerabschnitts derart ausgelegt werden, dass eine Überdeckung des Arbeitsanschlusses durch den Steuerabschnitt gering ist, wenn der Arbeitsanschluss in Richtung einer druckmittelführenden Struktur, die mit dem Zulaufanschluss kommuniziert, blockiert ist. Somit ergibt sich ein relativ großer Durchflussquerschnitt zwischen dem Arbeitsanschluss und dem Ablaufanschluss, wodurch Druckverluste innerhalb des Wegeventils minimiert werden. Mit zunehmender Temperatur wächst die axiale Erstreckung des Steuerabschnitts, wodurch der Volumenstrom von dem Arbeitsanschluss zu dem Ablaufanschluss gedrosselt und somit eine hohe Kontrollstabilität des angeschlossenen Verbrauchers, beispielsweise eines Nockenwellenverstellers, erreicht wird.
Vorteilhafterweise weist der Steuerabschnitt senkrecht zu der Verschieberichtung des Steuerkolbens den gleichen oder zumindest annähernd den gleichen thermischen Längenausdehnungskoeffizienten auf wie der Grundkörper. Somit wird vermieden, dass der Steuerkolben bei hohen Temperaturen innerhalb des Ventilgehäuses klemmt, oder die Leckage bei niedrigen Temperaturen untolerierbar hohe Werte erreicht.
In einer Weiterbildung der Erfindung ist vorgesehen, dass der Grundköper einen Anschlag aufweist, an dem der Steuerabschnitt in Verschieberichtung des Steuerkolbens anliegt. Somit ist der Steuerabschnitt in einer der Verschieberichtungen lagefixiert, die Längendehnung erfolgt nur entlang der entgegengesetzten Richtung. Dabei ist der Anschlag vorteilhafterweise zwischen einer druckmittelführenden Struktur, die mit dem Zulaufanschluss kommuniziert, und dem Steuerabschnitt angeordnet. Somit wirkt sich die Längendehnung des Steuerabschnitts ausschließlich auf die Verbindung zwischen dem Arbeitsanschluss und dem Ablaufanschluss aus.
In einer Konkretisierung der Erfindung wird vorgeschlagen, dass der Steuerabschnitt aus einem Polyamid, beispielsweise PA66, besteht.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung vereinfacht dargestellt ist. Es zeigen
- Figur 1: einen Teillängsschnitt durch eine erste erfindungsgemäßes Ausführungsform eines hydraulischen Wegeventils,
- Figur 2: einen Längsschnitt durch eine zweite erfindungsgemäßes Ausführungsform eines hydraulischen Wegeventils.

### Ausführliche Beschreibung der Zeichnung

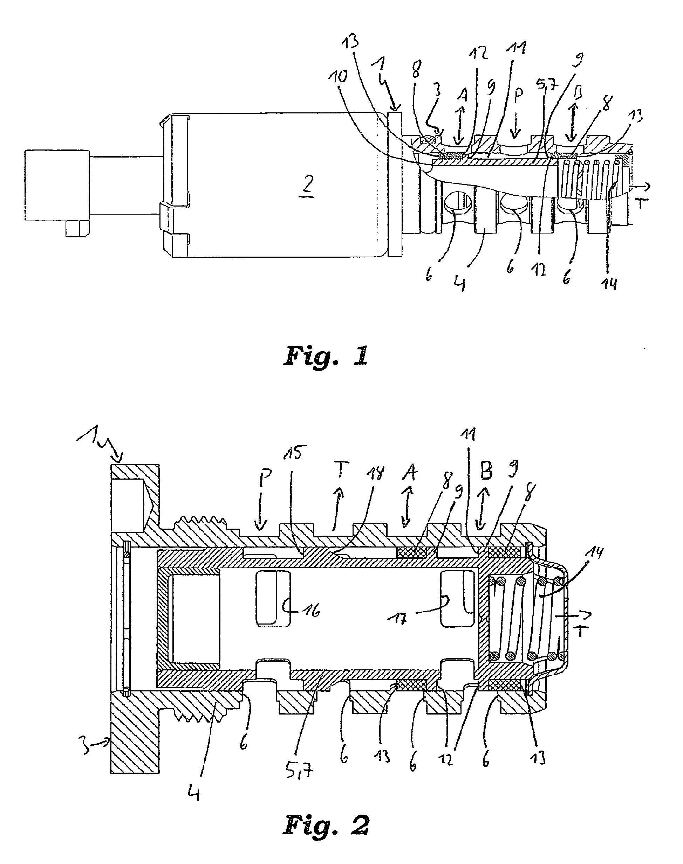

Figuren 1 und 2 zeigen eine erste und eine zweite Ausführungsform eines erfindungsgemäßen hydraulischen Wegeventils 1 am Beispiel eines als 4/3-Wegeproprtionalventils ausgeführten Wegeventils 1.
Das in Figur 1 dargestellte Wegeventil 1 weist eine Stelleinheit 2, beispielsweise eine elektromagnetische Stelleinheit 2, und einen Ventilabschnitt 3 auf, wobei der Ventilabschnitt 3 fest mit der Stelleinheit 2 verbunden ist. Derartige Wegeventile 1 sind üblicherweise in Aufnahmen angeordnet, die beispielsweise in einem Zylinderkopf, einem Zylinderkopfdeckel, einem Kurbelgehäuse, einem Getriebegehäuse oder ähnlichem ausgebildet sind.

Der Ventilabschnitt 3 weist ein im Wesentlichen hohlzylindrisch ausgebildetes Ventilgehäuse 4 und ein im Wesentlichen hohlzylindrisch ausgebildeten Steuerkolben 5 auf.

An der Außenmantelfläche des Ventilgehäuses 4 sind mehrere Druckmittelanschlüsse A, B, P ausgebildet, welche über Aussparungen 6 mit dem Inneren des Ventilgehäuses 4 kommunizieren. Zusätzlich dient die der elektromagnetischen Stelleinheit 2 abgewandte Öffnung des Ventilgehäuses 4 als Ablaufanschluss T. Der mittlere Druckmittelanschluss P, welcher als Zulaufanschluss dient, kommuniziert über eine nicht dargestellte Druckmittelleitung mit einer ebenfalls nicht dargestellten Druckmittelpumpe. Die beiden äußeren Druckmittelanschlüsse A, B, dienen als Arbeitsanschlüsse, die beispielsweise mit einem nicht dargestellten Nockenwellenversteller kommunizieren. Der Ablaufanschluss T kommuniziert mit einem ebenfalls nicht dargestellten Druckmittelreservoir.

Innerhalb des Ventilgehäuses 4 ist ein Steuerkolben 5 axial verschiebbar angeordnet. Dieser besteht aus einem Grundkörper 7 und zwei separat zu diesem gefertigten Steuerabschnitten 8. Die Steuerabschnitte 8 sind an einer Außenmantelfläche des Steuerkolbens 5 angeordnet und ringstegartig ausgebildet. Der Außendurchmesser der Steuerabschnitte 8 ist dem Innendurchmesser des Ventilgehäuses 4 angepasst. Die Steuerabschnitte 8 liegen in axialer Richtung an dem Grundkörper 7 ausgebildeten Anschlägen 9 an. Dabei sind die Anschläge 9 an der Seite der Steuerabschnitte 8 vorgesehen, die dem Zulaufanschluss P zugewandt sind. Des Weiteren sind an dem Grundkörper 7 Öffnungen 10 vorgesehen, die das Äußere des Grundköpers 7 mit dessen Inneren verbinden.

Durch Bestromen der Stelleinheit 2 kann der Steuerkolben 5, gegen die Kraft eines Federelements 14 in eine beliebige Position zwischen zwei Endanschlägen verschoben und dort gehalten werden. Durch eine geeignete axiale Positionierung des Steuerkolbens 5 relativ zum Ventilgehäuse 4 können benachbarte Druckmittelanschlüsse A, B, P miteinander verbunden werden. Der jeweils nicht mit dem Zulaufanschluss P verbundene Arbeitsanschluss A, B ist gleichzeitig mit dem Tankanschluss T verbunden. Zu diesem Zweck sind an jedem der Steuerabschnitte 8 zwei Steuerkanten 12, 13 an deren axialen Enden ausgebildet. Abhängig von der Stellung des Steuerkolbens 5 innerhalb des Ventilgehäuses 4 blockiert die erste Steuerkante 12 eines Steuerabschnitts 11 die Verbindung zwischen dem Zulaufanschluss P und dem jeweiligen Arbeitsanschluss A, B, während die zweite Steuerkante 13 des anderen Steuerabschnitts 11 die Verbindung zwischen dem anderen Arbeitsanschluss A, B und dem Ablaufanschluss T blockiert.

Während des Betriebs der Brennkraftmaschine wird dem Zulaufanschluss P Druckmittel zugeführt, welches über die Aussparung 6 in eine druckmittelführende Struktur, in der dargestellten Ausführungsform eine Ringnut 11, im Inneren des Ventilgehäuses 4 gelangt. Abhängig von der Stellung des Steuerkolbens 5 relativ zu dem Ventilgehäuse 4 gelangt das Druckmittel zu dem ersten oder zweiten Arbeitsanschluss A, B und von dort über eine Druckmittelleitung zu dem Verbraucher. Gleichzeitigt gelangt Druckmittel von dem Verbraucher zu dem anderen Arbeitsanschluss A, B und von dort oder über die Öffnungen 10 und das Innere des Steuerkolbens 5 oder direkt zu dem Ablaufanschluss T.

Die Steuerabschnitte 8 sind aus einem Material gefertigt, das in axialer Richtung einen größeren Längenausdehnungskoeffizienten aufweist, als der Grundkörper 7. In den Ebenen senkrecht zu zur Verschieberichtung weisen die Steuerabschnitte 8 einen Längenausdehnungskoeffizienten auf, der ungefähr dem des Grundkörpers 7 entspricht. Da die Steuerabschnitte 8 in axialer Richtung an den Anschlägen 9 anliegen, ändern sich die axialen Positionen der ersten Steuerkanten 12 nicht mit steigender Temperatur. Demgegenüber verschieben sich die axialen Positionen der zweiten Steuerkanten 13 mit steigender Temperatur, auf Grund der temperaturabhängigen Längendehnung, in Richtung der axialen Enden des Grundköpers 7. Bei niedrigen Temperaturen liegt somit bei einer gegebenen Durchflussfläche zwischen dem Zulaufanschluss P und einem der Arbeitsanschlüsse A, B eine relativ große Durchflussfläche zwischen dem anderen Arbeitsanschluss A, B und dem Ablaufanschluss T vor. Dies führt dazu, dass relativ geringe Druckverluste zwischen diesem Arbeitsanschluss A, B und dem Ablaufanschluss T vorliegen.
Mit steigender Temperatur schrumpft die Durchflussfläche zwischen dem Arbeitsanschluss A, B und dem Ablaufanschluss T. Somit kann trotz geringer werdender Viskosität des Druckmittels eine hohe Kontrollstabiltät des Verbrauchers aufrechterhalten werden.

Figur 2 zeigt eine weitere erfindungsgemäße Ausführungsform eines Wegeventils 1. In dieser Ausführungsform ist der Ventilabschnitt 3 nicht ortsfest mit einer nicht dargestellten Stelleinheit verbunden. Vielmehr ist der Ventilabschnitt 2 innerhalb eines Verbrauchers, beispielsweise eines Innenrotors eines Nockenwellenverstellers angeordnet und die Stelleinheit 3 axial dazu versetzt positioniert. Die Stellbewegung der Stelleinheit kann beispielsweise mittels einer nicht dargestellten Stößelstange auf den Steuerkolben 5 übertragen werden.
In dieser Ausführungsform wird dem Wegeventil 1 über den Zulaufanschluss P Druckmittel zugeführt. Das Druckmittel gelangt über die Aussparungen 6 des Zulaufanschlusses P in eine an dem Steuerkolben 5 ausgebildete zweite Ringnut 15 und über erste Öffnungen 16 in dessen Inneres. Von dort gelangt das Druckmittel über zweite Öffnungen 17 in eine druckmittelführende Struktur, in der dargestellten Ausführungsform eine Ringnut 11. Abhängig von der Stellung des Steuerkolbens 5 relativ zu dem Ventilgehäuse 4 gelangt das Druckmittel von dort zu dem ersten oder zweiten Arbeitsanschluss A, B und von dort zu dem hydraulischen Verbraucher. Gleichzeitig gelangt Druckmittel von dem Verbraucher zu dem anderen Arbeitsanschluss A, B und von dort entweder direkt zu einem axialen Ablaufanschluss T oder über eine dritte Ringnut 18 zu einem radialen Ablaufanschluss T.
In Unterschied zur ersten Ausführungsform ist der Außendurchmesser der Anschläge 9 dem Innendurchmesser des Ventilgehäuses 4 angepasst. Somit sind die ersten Steuerkanten 12 an den Anschlägen 9 und die zweiten Steuerkanten 13 an den Steuerabschnitten 8 ausgebildet. Wie in der ersten Ausführungsform bleibt die axiale Position der ersten Steuerkanten 12 relativ zu dem Grundkörper 7 mit der Temperatur konstant, während die axiale Entfernung der zweiten Steuerkanten 13 von der jeweiligen ersten Steuerkante 12 mit steigender Temperatur zunimmt.

### Bezugszeichen

- 1: Wegeventil
- 2: Stelleinheit
- 3: Ventilabschnitt
- 4: Ventilgehäuse
- 5: Steuerkolben
- 6: Aussparungen
- 7: Grundkörper
- 8: Steuerabschnitt
- 9: Anschlag
- 10: Öffnung
- 11: Ringnut
- 12: erste Steuerkante
- 13: zweite Steuerkante
- 14: Federelement
- 15: zweite Ringnut
- 16: erste Öffnung
- 17: zweite Öffnung
- 18: dritte Ringnut

- P: Zulaufanschluss
- T: Tankanschluss
- A: erster Arbeitsanschluss
- B: zweiter Arbeitsanschluss

## Patentansprüche

1. Hydraulisches Wegeventil (1) mit einem Ventilgehäuse (4) und einem darin verschiebbar angeordneten Steuerkolben (5),
- wobei das Ventilgehäuse (4) zumindest einen Ablaufanschluss (T), einen Zulaufanschluss (P) und einen Arbeitsanschluss (A, B) aufweist,
- wobei der Steuerkolben (5) einen Grundkörper (7) und zumindest einen Steuerabschnitt (8) aufweist,
- wobei der Steuerabschnitt (8) einen Druckmittelfluss von dem Zulaufanschluss (P) zu dem Arbeitsanschluss (A, B) und/oder einen Druckmittelfluss von dem Arbeitsanschluss (A, B) zu dem Ablaufanschluss (T) steuert und
- wobei der Steuerabschnitt (8) separat zu dem Grundkörper (7) gefertigt und an diesem befestigt ist,
- **dadurch gekennzeichnet, dass** der Steuerabschnitt (8) in Verschieberichtung des Steuerkolbens (5) einen größeren thermischen Längenausdehnungskoeffizienten aufweist als der Grundkörper (7).

2. Hydraulisches Wegeventil (1) nach Anspruch 1, **dadurch gekennzeichnet, dass** der Steuerabschnitt (8) senkrecht zu der Verschieberichtung des Steuerkolbens (5) den gleichen oder zumindest annähernd den gleichen thermischen Längenausdehnungskoeffizienten aufweist wie der Grundkörper (7).

3. Hydraulisches Wegeventil (1) nach Anspruch 1, **dadurch gekennzeichnet, dass** der Grundköper (7) einen Anschlag (9) aufweist, an dem der Steuerabschnitt (8) in Verschieberichtung des Steuerkolbens (5) anliegt.

4. Hydraulisches Wegeventil (1) nach Anspruch 3, **dadurch gekennzeichnet, dass** der Anschlag (9) zwischen einer druckmittelführenden Struktur (11), die mit dem Zulaufanschluss (P) kommuniziert, und dem Steuerabschnitt (8) angeordnet ist.

5. Hydraulisches Wegeventil (1) nach Anspruch 1, **dadurch gekennzeichnet, dass** der Steuerabschnitt (8) aus einem Polyamid, beispielsweise PA66, besteht.

## Claims

1. Hydraulic directional control valve (1) with a valve housing (4) and with a control piston (5) arranged displaceably therein,
- wherein the valve housing (4) has at least one outlet connection (T), at least one inlet connection (P) and at least one working connection (A, B),
- wherein the control piston (5) has a basic body (7) and at least one control section (8),
- wherein the control section (8) controls a pressure medium flow from the inlet connection (P) to the working connection (A, B) and/or a pressure medium flow from the working connection (A, B) to the outlet connection (T), and
- wherein the control section (8) is manufactured separately from the basic body (7) and is fastened to the latter,
- **characterized in that** the control section (8) has a greater coefficient of thermal elongation than the basic body (7) in the displacement direction of the control piston (5).

2. Hydraulic directional control valve (1) according to Claim 1, **characterized in that** the control section (8) has the same or at least approximately the same coefficient of thermal elongation as the basic body (7) perpendicularly to the displacement direction of the control piston (5).

3. Hydraulic directional control valve (1) according to Claim 1, **characterized in that** the basic body (7) has a stop (9) against which the control section (8) bears in the displacement direction of the control piston (5).

4. Hydraulic directional control valve (1) according to Claim 3, **characterized in that** the stop (9) is arranged between a pressure-medium-conducting structure (11), which communicates with the inlet connection (P), and the control section (8).

5. Hydraulic directional control valve (1) according to Claim 1, **characterized in that** the control section (8) consists of polyamide, for example PA66.

## Revendications

1. Distributeur hydraulique (1) comprenant un boîtier de soupape (4) et un piston de commande (5) disposé de manière coulissante dans celui-ci,
- le boîtier de soupape (4) comprenant au moins un raccord d'évacuation (T), un raccord d'alimentation (P) et un raccord de travail (A, B),
- le piston de commande (5) comprenant un corps de base (7) et au moins une section de commande (8),
- la section de commande (8) guidant un flux de fluide sous pression à partir du raccord d'alimentation (P) jusqu'au raccord de travail (A, B) et/ou un flux de fluide sous pression à partir du raccord de travail (A, B) jusqu'au raccord d'évacuation (T) et
- la section de commande (8) étant fabriquée de manière séparée du corps de base (7) et étant fixée à ce dernier,
**caractérisé en ce que** la section de commande (8) présente un coefficient de dilatation thermique longitudinale dans la direction de coulissement du piston de commande (5) supérieur à celui du corps de base (7).

2. Distributeur hydraulique (1) selon la revendication 1, **caractérisé en ce que** la section de commande (8) présente le même ou au moins approximativement le même coefficient de dilatation thermique longitudinale perpendiculairement à la direction de coulissement du piston de commande (5) que celui du corps de base (7).

3. Distributeur hydraulique (1) selon la revendication 1, **caractérisé en ce que** le corps de base (7) comprend une butée (9) contre laquelle s'applique la section de commande (8) dans la direction de coulissement du piston de commande (5).

4. Distributeur hydraulique (1) selon la revendication 3, **caractérisé en ce que** la butée (9) est disposée entre une structure (11) conduisant du fluide sous pression qui communique avec le raccord d'alimentation (P) et la section de commande (8).

5. Distributeur hydraulique (1) selon la revendication 1, **caractérisé en ce que** la section de commande (8) est constituée d'un polyamide, par exemple de PA66.
